# EUROPEAN PATENT SPECIFICATION

(11) **EP 3 215 547 B1**
(45) Date of publication and mention of the grant of the patent: **16.02.2022**
(21) Application number: 15791227.0
(22) Date of filing: 03.11.2015
(51) Int. Cl.: C08G 18/66, C08G 18/10

(54) **IMPACT PROTECTION FOAM**
SCHLAGSCHUTZSCHAUMSTOFF
MOUSSE DE PROTECTION CONTRE LES CHOCS

(30) Priority: 05.11.2014 IT MI20141892
(43) Date of publication of application: 13.09.2017
(73) Proprietor: Dow Global Technologies LLC, Midland, MI 48674 (US)
(72) Inventor: CORINTI, Elisa, I-42015 Correggio (IT); BENVENUTI, Andrea, I-42015 Correggio (Reggio Emilia) (IT); SCUSSOLIN, Silvia, I-42047 Rolo (IT)
(74) Representative: Beck Greener LLP
(86) International application number: PCT/US2015/058706
(87) International publication number: WO 2016/073396

(56) References cited:
- EP-A1- 2 738 193
- US-A1- 2009 143 495
- US-A1- 2009 264 547

## Description

### Field

Embodiments relate to impact protection foam that is capable of performing under varying temperature conditions.

### Introduction

Polyurethane foams are used in a variety of applications such as cushioning for impact protection. US 2009/0264547 relates to polyether polyol compositions containing renewable raw materials, a process for preparing visco-elastic polyurethane foams using such compositions, correspondingly prepared visco-elastic foam materials, and the use thereof. EP2738193 relates to a polyurethane foam obtained from a polyurethane raw material containing polyol, isocyanate, a foam stabilizer, a catalyst and a foam-forming gas by a mechanical froth method, wherein the polyol contains a caster oil-based polyol having a viscosity at 25°C of 2,000 mPa·s or less, and a polyether-based polyol, the castor oil-based polyol is contained in an amount of from 20 to 80 parts by weight per 100 parts by weight of the polyol, the polyether-based polyol is contained in an amount of from 20 to 80 parts by weight per 100 parts by weight of the polyol, and the urethane foam has an apparent density of from 100 to 700 kg/m³ , and compressive residual strain at 100°C of 20% or less. The polyurethane foam of EP2738193 can be preferably used as a sealing material in a neighboring region of a heat source.

The impact protection foam may help to absorb and dissipate impact energies. For example, the impact protection foam may be an energy-absorbing foam for personal protection, e.g., for use when participating in contact sports and high-impact activities such as riding bicycles, motorcycles, all-terrain vehicles, etc. The impact protection foam may be made into curved or complex shapes that are usable alone or in a composite article (e.g., the impact protection foam may be arranged between outer layers to form a composite impact protection article). When making impact protection, heavy and non- breathable or restrictive materials should be avoided, e.g., thickness should minimized to avoid the impact absorbing material from becoming too heavy and bulky for consumer tastes. Further, the impact protection should be accurately applied to body parts, e.g., flexibility should be maintained in an effort to conform to complex three-dimensional shapes. For example, the impact protection foam may be designed to protect parts of the body from damage/injury while conforming to the shape of surfaces on the body and/or providing an article that is comfortable.

In addition, the impact protection should still maintain protection against a serious impact under various environmental conditions. However, typical polyurethane foams may have limitations at colder temperatures (e.g., -10°C). Accordingly, a need exists for an impact protection polyurethane based foam that exhibits both enhanced flexibility and conformability across a varied temperature range. For example, shock-absorbing polyurethane foams that have relatively stable physical properties at varied temperatures, lower resilience over a wide range of temperatures, and usefulness as shock-absorbing materials are sought.

### Summary

Embodiments may be realized by providing an impact protection foam that includes the reaction product of an isocyanate component and an isocyanate-reactive component. The isocyanate component includes at least one isocyanate. The isocyanate-reactive component includes from 20 wt% to 80 wt% of a hydrophobic polyol component and from 20 wt% to 80 wt% of a hydrophilic polyol component, based on the total weight of the isocyanate reactive component. The hydrophobic polyol component includes at least one natural oil hydrophobic polyol and further includes from 1 wt% to 30 wt% of a polyoxypropylene or polyoxypropylene/polyoxyethylene diol or triol that has a number average molecular weight of less than 700 g/mol, and the hydrophilic polyol component includes at least a polyether polyol having a number average molecular weight from 3,000 g/mol to 10,000 g/mol and a primary hydroxyl content of at least 50 wt% and further includes from 1 wt% to 30 wt% of an additional polyol that is a polyoxypropylene or polyoxypropylene/polyoxyethylene diol or triol having a number average molecular weight from 3,500 g/mol to 5,500 g/mol. The isocyanate index is from 50-120. The foam article has a rate of energy dissipation less than 35 KN over the temperature range from -10 °C to 40 °C measured by impact test according to EN 1621-1, and a Shore A hardness of less than 55 at both 23 °C and -10 °C measured according to DIN 53543.

### Brief Description of the Drawings

FIG. 1 illustrates dynamic thermal mechanical analysis (DTMA) tan delta graphs for Working Examples 3 and 4 and Comparative Examples B and C.
FIG. 2 illustrates DTMA storage modulus graphs for Working Examples 3 and 4 and Comparative Examples B and C.

### Detailed Description

Impact protection foam such as shock pads and protectors should be light as possible to provide a high degree of comfort during the wear and should be able to dissipate the energy of an impact/shock in a wide range of temperatures. By impact protection foam it is meant energy absorbent impact foam systems designed for the protection of humans, animals, and/or objects from injury/damage by impact (such as externally applied force). With respect to use of the impact protection foam in cushioning applications (and optionally packaging applications), the foam material is usually designed to withstand low to moderate compressive stresses. The foam may be designed such that under these conditions, the strain induced in the foam as a result of the applied compressive stress during use is within an elastic limit of the foam. Within the elastic limit, the induced strain (i.e., compression of the foam) can be approximately proportional to the applied compressive stress. As such, doubling the stress may induce approximately a doubling of the strain. Foam that is compressed within its elastic limit may return, when the compressive force is removed, to approximately the same amount of energy as was required to compress the foam. This may allow the foam to absorb energy from specific level impacts, e.g., without permanently deforming the foam or significantly diminishing its ability to cushion further impact events.

Impact protection foam may continue to absorb energy at a more or less constant rate as it is compressed to a fraction of its original thickness. The behavior of cellular polymers may be such that the compressive stress needed to induce strain may increase more or less linearly up to the elastic limit, e.g., to a strain of approximately 3-10% of the original foam thickness. After exceeding the elastic limit, the compressive stress may tend to remain nearly constant up to approximately 20% - 30% strain, and then increase dramatically as more strain is induced to the foam. It would be more desirable if the compressive stress remains nearly constant to higher strains, such as 40-60% strain or more. This would both lengthen the time over which deceleration occurs (e.g., by distributing energy over the longer time period needed to compress the cellular polymer to the higher strain) and reduce the maximum deceleration because energy is absorbed more evenly as the cellular polymer is compressed. For example, this type of cellular polymer may be applicable to sport or protection equipment that seeks good shock absorption level at low temperatures.

For impact protection foams, embodiments relate to the combination of hydrophobic and hydrophilic backbones that provide to the final polyurethane foam/polymer a good impact performance across a wide temperature range. Polyurethane polymers contain urethane moieties and are made by starting materials that include at least an isocyanate component and an isocyanate-reactive component. The isocyanate component includes at least one isocyanate (e.g., a polyisocyanate and/or an isocyanate-terminated prepolymer). The isocyanate-reactive component includes at least one polyol component. The isocyanate-reactive component may include other active hydrogen compounds, such as polyamines. An optional additive component that includes at least one optional additive (such as a blowing agent, a catalyst, a curative agent, a chain extender, a flame retardant, a filler, a stabilizer, a surfactant, a plasticizer, a zeolite, and/or other additives that modify properties of the resultant final polyurethane product), may be included.

### Properties of Impact Protection Foam

The impact protection foam may fulfill the requirements of the standard EN 1621, for which exemplary uses include technical garments for motorcyclists and military use. The standard EN 1621 may be referred to as the Motorcyclists' Protective Clothing against mechanical impact standard. Part 1 (i.e., EN 1621-1) relates to the requirements and test methods for impact protectors. The principle of the EN 1621-1 test is to assess the protective qualities of armour worn on the limb joints while riding a motorcycle and during a test impact the force transmitted through the sample is measured. The lower the force the more protective a product is considered to be. To pass the standard the mean maximum transmitted force must be below 35 kN and no single value should be over 50 kN. The standard includes additional tests to assess performance in high and low temperature environments plus after storage in humid conditions. Part 2 (i.e., EN 1621-2) relates to the requirements and test methods specifically for back protectors type impact protectors, and uses similar methods as EN 1621-1.

According to embodiments, the impact protection foam has good shock absorption properties even at low temperatures so as to be useable at both higher and lower temperatures. The impact protect foams of embodiments demonstrate a transmitted force below 35 KN, measured by impact test according to EN 1621-1, e.g., at different temperatures and after humid ageing. The criterion for passing the EN1621-1 test is that the peak load transmitted is less than 35 kN for the impact speed of 4.3m/s and an impact energy of 50J (a 5 kg weight of specified shape was caused to impact the device held over an anvil of specified shape such that the impact energy is 50 J). EN 1621-1 can be performed at room temperature (e.g., a temperature of 23 °C). According to the EN 1621-1 standard, Level 1 < 35 kN and Level 2 < 20 kN, whereas Level 2 indicates an improved performance over Level 1. A characterization of Level 1 and Level 2 may be based on multiple samples (e.g., three samples), whereas each sample must meet the characterization level.

The impact protection foam of the embodiments is capable of delivering high impact protection with a good rate of energy dissipation of less than 35 KN over a temperature range of -10°C to 40°C), even after hydrolysis. Whereas hydrolysis is defined as conditioning before testing that consists of exposing the article to 72 hours at 70±2°C and greater than 96% relative humidity, and thereafter 24 hours at 23°C. This classifies the protection pads based on performance, where generally the lower the value represents better performance of the material under an impact. According to exemplary embodiments, the impact protection foam has an energy dissipation of less than 20.0 KN (e.g., Level 2 for each of the samples tested) at -10°C and/or less than 14.5 KN at -10°C (e.g., for each of the samples tested). The impact protection foam may also have an energy dissipation of less than 25.0 KN (e.g., for each of the samples tests) at 40°C. The impact protection foam may have an energy dissipation of less than 31.0 KN and/or less than 30.2 KN (for each of the samples tests), after hydrolysis. Accordingly, the polyurethane polymer in the impact protection foam is able to provide an improved impact performance after humid aging, in warm conditions (such as 40°C), and in cold conditions (such as -10°C), while still maintaining a high level of comfort to the end-user.

The impact protection foam may be a viscoelastic, low resiliency, and/or low density polyurethane foam formed at a relatively low isocyanate index and that has a relatively low water content. For example, the formulation for forming the foam may include water, e.g., in an amount less than 1 wt% and/or less than 0.5 wt%, based on the total weight of the isocyanate-reactive component. By viscoelastic and low resiliency it is meant that the foam article has a ball rebound (as measured by ASTM D 3574H) of less than 20%. In exemplary embodiments, the ball rebound is less than 20% and/or 15% or less at both 23 °C and -10 °C. Further, to obtain viscoelastic behavior in a polyurethane foam, one possible approach is to shift the glass transition temperature nearer to room temperature by using a lower molecular weight polyol in combination with a lower isocyanate index. However, the low isocyanate index can result in a foam with poor fatigue resistance, which would not be appropriate for use in impact protection foam articles. To compensate for poor fatigue resistance, the industry trend has been to raise the density of the resulting foam, which would not be appreciate for use in impact protection foam articles where lighter weight solutions are sought. Exemplary embodiments relate to alternatives that combine viscoelastic, low resiliency, and low density, and incorporate the use of a hydrophilic polyol component and a hydrophobic polyol component.

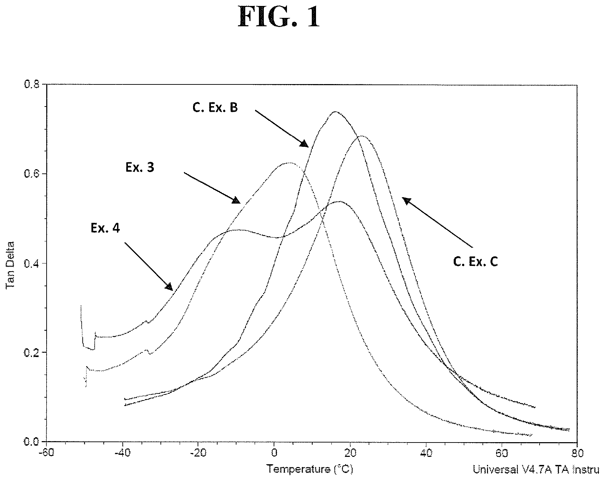

Dynamic mechanical thermal analysis (DMTA) may be used to determine the viscoelastic properties of an impact protection foam over a large temperature range. For example, DMTA may be used to measure tan delta, glass transition temperature, and storage modulus. Where tan delta is a measure of the ratio of energy dissipated as heat to maximum energy stored in the material. Accordingly, tan delta increases to a peak (i.e., an uppermost point along a rising peak of a tan delta plot) at a temperature in which the energy dissipated as heat approaches the energy stored (e.g., at a time when the glass-rubber phase transition temperature is reached). The storage modulus measures the stored energy (versus dissipated), representing the elastic portion of the polymer. Optimal protection over a wide temperature range can be observed as a wide curve that shows high values across a large range of temperatures, e.g., see FIG. 1 with respect to the wide peaks for Working Examples 3 and 4 in comparison to the relatively narrow peaks for Comparative Examples B and C.

The impact protection foams have a relatively low hardness at both 23 °C and -10 °C. In particular, Shore A hardness is less than 55 at both 23 °C and -10 °C for the impact protection foams. For example, the Shore A hardness may be less than 55 and/or from 20 to 50 at both 23 °C and -10 °C, while still exhibiting a rate of energy dissipation less than 35 KN over the temperature range from -10 °C to 40 °C. The density of the polyurethane foam may be less than 600 g/L, e.g., from 200 g/L to 550 g/L, from 300 g/L to 520 g/L, from 400 g/L to 500 g/L, and/or from 450 g/L to 500 g/L.

The impact protection foams may exhibit a relatively low average water absorption/water uptake after exposure to 70°C for 24 hours and to 100% relative humidity environment. For example, the average water absorption/water uptake is measured as the percent change in weight after a sample is exposure to 100% humidity environment at 70°C for the prolonged period of time of 24 hours. For example, an impact protection foam article has a water absorption of less than 5.0%, less than 4.0%, and/or less than 3.7%, measured as the percent change in weight (i.e., [difference between initial and weight after exposure]/[initial weight]) after exposure to 100% relative humidity at 70°C for a period of 24 hours

The impact protect foam may be a self-supporting article and/or embedded within a non-rigid material/garment to serve as an impact absorption member. The impact protect foam may be used without an additional rigid member, which rigid member has the purpose to spread the impact force over a greater area. In particular, rigid members tend to be inflexible and uncomfortable if in contact with a human body. For example, vulnerable areas of the body that require protection such as elbows and knees, undergo significant changes in geometry and attempts to match a rigid shape for load spreading may fail.

### Formation of Impact Protection Foam

The polyurethane polymer in the impact protection foam is the reaction product of the isocyanate component and the isocyanate-reactive component.

The isocyanate component includes at least one isocyanate. Exemplary isocyanates include diphenylmethane diisocyanate (MDI), toluene diisocyanate (TDI), m-phenylene diisocyanate, p-phenylene diisocyanate (PPDI), naphthalene diisocyanate (NDI), isophorone diisocyanate (IPDI), hexamethylene diisocyanate (HDI), and various isomers and/or derivatives thereof. Using at least one of its 2,4'-, 2,2'-, and 4,4'-isomers, MDI may have a polymeric, a copolymer, a mixture, or a modified polymer form. Exemplary MDI products are available from The Dow Chemical Company under the trade names ISONATE, PAPI, and VORANATE. Using at least one of its 2,4 and 2,6-isomers, TDI may have a polymeric, a copolymer, a mixture, or a modified polymer form. Exemplary TDI products are available from The Dow Chemical Company under the trade name VORANATE. The isocyanate may have an average functionality of from 2.8 to 3.2 (e.g., 2.2 to 2.9, etc.). The isocyanate may be a prepolymer that has a free isocyanate group content (i.e., NCO content) of from 15 wt% to 35 wt% (e.g., 20 wt% to 30 wt% and/or 20 wt% to 25 wt%).

Because of the differences of processes used to make foam articles, there are differences in the desireable isocyanate component. Toluene diisocyanate ("TDI") may be used in preparing slabstock foams. Diphenylmethane diisocyanate ("MDI") may be used for molded foams. For example, MDI may be used for certain specialty applications in which a "two-shot" process is employed. In this type of process the solid MDI or modified (liquid) MDI is pre-reacted with at least one polyol to form a prepolymer (i.e., an isocyanate-terminated polyurethane prepolymer). The resulting prepolymers may be stable as a liquid at room temperature. MDI prepolymers have been shown to enable improved elastomeric properties. The prepolymer may then be reacted in a subsequent step with additional polyol (or other active hydrogen) and/or additives such as a blowing agent and/or a crosslinker, to form a polyurethane foam.

The isocyanate component maybe a MDI prepolymer that has a high average free NCO (i.e., isocyanate moiety) content. For example, the isocyanate component includes an isocyanate-terminated MDI based prepolymer having an average NCO content from 15 wt% to 35 wt%.

The isocyanate-reactive component includes from 20 wt% to 80 wt% of a hydrophobic polyol component and 20 wt% to 80 wt% of a hydrophilic polyol component, based on the total weight of the isocyanate-reactive component. For example, the hydrophobic polyol component may account for 30 wt% to 70 wt%, 35 wt% to 60 wt%, 40 wt% to 50 wt%, and/or 42 wt% to 48 wt%, based on the total weight of the isocyanate-reactive component. The hydrophilic polyol component may account for 30 wt% to 70 wt%, 40 wt% to 65 wt%, 45 wt% to 60 wt%, and/or 48 wt% to 55 wt%, based on the total weight of the isocyanate-reactive component. The hydrophilic polyol component may be present in a greater amount than the hydrophobic polyol component. The isocyanate-reactive component may optionally include an additive component that accounts for 0.1 wt% to 15 wt% of the total weight of the isocyanate-reactive component. The additive component may include one or more catalyst, one or more chain extenders, one or more crosslinking agents, one or more surfactants, and/or one or more blowing agents.

The hydrophobic polyol component includes at least a natural oil hydrophobic polyol and further includes from 1 wt.% to 30 wt.% of a polyoxypropylene or polyoxypropylene/polyoxyethylene diol or triol that has a number average molecular weight of less than 700 g/mol. The natural oil hydrophobic polyol may account for 20 wt% to 80 wt%, 30 wt% to 60 wt%, 35 wt% to 50 wt%, and/or 35 wt% to 40 wt% of the total weight of the isocyanate-reactive component. For example, the natural oil hydrophobic polyol may be di- and/or tri-glycerides of aliphatic carboxylic acids of 10 carbon atoms or more, e.g., triglycerides of hydroxyl-substituted aliphatic carboxylic acids. An example is castor oil, which is a vegetable oil obtained from the castor seed/plant. A majority of the fatty acids in castor oil may be ricinoleate/ricinoleic acid (i.e., 12-hydroxy-9-*cis*-octadecenoic acid), which can be referred to as a monounsaturated, 18-carbon fatty acid having a hydroxyl functional group at the twelfth carbon. This functional group causes ricinoleic acid (and castor oil) to be polar, e.g., having polar dielectric with a relatively high dielectric constant (4.7) for highly refined and dried castor oil. An exemplary castor oil may include at least 85 wt% of ricinoleic acid (12-hydroxyoleic acid) and minor amounts of linoleic acid, oleic acid, stearic acid, palmitic acid, dihydroxystearic acid, linolenic acid, elcosanoic acid, and/or water. Castor oil may have a true hydroxyl functionality of approximately 2.64 and an equivalent weight of approximately 342. The castor oil may be modified or unmodified, e.g., modified castor oil may contain an additive such as a formaldehyde or polyester polyol.

In addition to the natural oil hydrophobic polyol such as castor oil, the hydrophobic polyol component may include additional hydrophobic polyol(s). For example, the hydrophobic polyol component may include another natural oil polyol, a natural oil derived polyol, a hydrophobic polyester polyol, and/or a hydrophobic polyether polyol. For example, the hydrophobic polyol component may include from 1 wt% to 30 wt%, 1 wt% to 25 wt%, 1 wt% to 20 wt%, 1 wt% to 15 wt%, 1 wt% to 10 wt%, 1 wt% to 7 wt%, and/or 3 wt% to 7 wt% of a hydrophobic polyether polyol, based on a total weight of the isocyanate-reactive component. The hydrophobic polyether polyol may be a polyoxypropylene or polyoxypropylene/polyoxyethylene diol or triol that has a number average molecular weight of less than 700 g/mol, less than 600 g/mol, and/or less than 500 g/mol.

The hydrophilic polyol component includes at least one high molecular weight and high primary hydroxyl content hydrophilic polyether polyol. Of which, high molecular weight and high primary hydroxyl content hydrophilic polyether polyol may account for 20 wt% to 80 wt%, 30 wt% to 60 wt%, 35 wt% to 50 wt%, and/or 35 wt% to 40 wt% of the total weight of the isocyanate-reactive component. The weight ratio of the castor oil to high molecular weight and high primary hydroxyl content hydrophilic polyether polyol may be from 0.90:1.10 to 1.10: 0.90 and/or 0.95:1.05 to 1.05:0.95 (e.g., so as to have a weight ratio of approximately 1:1). The castor oil and the high molecular weight and high primary hydroxyl content hydrophilic polyether polyol combined may account for at least 70 wt% of a total weight of the isocyanate-reactive component, e.g., from 70 wt% to 90 wt%, from 70 wt% to 85 wt%, from 70 wt% to 80 wt%, and/or from 72 wt% to 80 wt%.

The high molecular weight and high primary hydroxyl content hydrophilic polyether polyol has a number average molecular weight from 3000 g/mol to 10,000 g/mol, e.g., from 3000 g/mol to 8000 g/mol, from 3200 g/mol to 6000 g/mol, from 3500 g/mol to 5500 g/mol, from 4000 g/mol to 5000 g/mol, and/or from 4200 g/mol to 4700 g/mol. The hydrophilic polyether polyol has a primary hydroxyl content of at least 50 wt% and/or at least 70 wt% (based on the total hydroxyl content in the hydrophilic polyether polyol), e.g., of at least 75 wt%, from 80 wt% to 95 wt%, and/or from 80 wt% to 90 wt%. The high molecular weight and high primary hydroxyl content hydrophilic polyether polyol may be a polyoxypropylene or polyoxypropylene/polyoxyethylene polyol (e.g., such as a polyoxyethylene capped polyoxypropylene/polyoxyethylene polyol). For example, the high molecular weight and high primary hydroxyl content hydrophilic polyether polyol may have an average nominal hydroxyl functionality of from 2 to 6 (e.g., may be a diol or triol).

In addition to the high molecular weight and high primary hydroxyl content hydrophilic polyether polyol, the hydrophilic polyol component further includes from 1 wt% to 30 wt% of an additional polyol that is a polyoxypropylene or polyoxypropylene/polyoxyethylene diol or triol having a number average molecular weight from 3,500 g/mol to 5,500 g/mol. In addition the hydrophilic polyol component may include additional polyol(s), e.g., a hydrophilic polyester polyol, a hydrophilic polyether polyol, and/or a polyether polyol that is not a hydrophobic polyol . For example, the hydrophilic polyol component may include only high molecular weight (molecular weight of at least 3000 g/mol) polyether polyols. For example, the hydrophilic polyether polyol component may include 1 wt% to 30 wt%, 1 wt% to 25 wt%, 1 wt% to 20 wt%, 1 wt% to 15 wt%, 1 wt% to 10 wt%, 1 wt% to 7 wt%, and/or 3 wt% to 7 wt% of a high molecular weight polyether polyol, based on the total weight of the isocyanate-reactive component. The high molecular weight polyether polyol may have a number average molecular weight from 3000 g/mol to 10,000 g/mol, e.g., from 3000 g/mol to 8000 g/mol, from 3500 g/mol to 6000 g/mol, from 4000 g/mol to 5500 g/mol, from 4500 g/mol to 5500 g/mol, and/or from 4750 g/mol to 5250 g/mol. The high molecular weight polyether polyol may be a polyoxypropylene/polyoxyethylene polyol such as a polyoxyethylene capped polyoxypropylene/polyoxyethylene polyol. For example, the high molecular weight polyether polyol may have an average nominal hydroxyl functionality of from 2 to 6 (e.g., may be a diol or triol).

The isocyanate-reactive component may be reacted with the isocyanate component at an isocyanate index from 50 to 120 (e.g., 50 to 120, 70 to 100, 70 to 90, etc.) to form the polyurethane foam/polymer. The isocyanate index is measured as the equivalents of isocyanate in the reaction mixture for forming the polyurethane foam/polymer, divided by the total equivalents of isocyanate-reactive hydrogen containing materials in the reaction mixture, multiplied by 100. Considered in another way, the isocyanate index is the ratio of isocyanate-groups over isocyanate-reactive hydrogen atoms present in the reaction mixture, given as a percentage.

The optional additive component may be added in its entirety to the isocyanate-reactive component, in part to the isocyanate-reactive component and in part to the isocyanate component, and/or may be separately provided from the isocyanate-reactive component and the isocyanate component.

The optional additive component may include an optional catalyst component that includes at least one catalyst. For example, the additive component may include each of a gelling catalyst, a blowing catalyst, and a tin and/or amine based catalyst. For example, the catalyst component may account for less than 5 wt% of a total weight of the isocyanate-reactive component. Exemplary catalysts include tertiary amines, Mannich bases formed from secondary amines, nitrogen- containing bases, alkali metal hydroxides, alkali phenolates, alkali metal alcoholates, hexahydrothiazines, and organometallic compounds. A curing agent including may be a bifunctional organic diamine compound (such as a toluene based diamine, a phenyl based diamine, an alkyl based dianiline, a polyether based diamine, or an isophorone based diamine) or a trifunctional organic diamine compound (such as a phenyl based triamine, an alkyl based tramine, or a propylene based triamine).

The optional chain extender component may include a chain extender, e.g., that has two isocyanate-reactive groups per molecule and may have an equivalent weight per isocyanate-reactive group of less than 400. Exemplary chain extenders include 1,4-butane diol ("butane diol" or "BDO"), ethlyene glycol, and diethylene glycol. If included, the chain extender component may be present in an amount from 0.1 wt% to 5 wt%, based on a total weight of the isocyanate-reactive component. The optional crosslinker component may include at least one crosslinker that has three or more isocyanate-reactive groups per molecule and an equivalent weight per isocyanate-reactive group of less than 400. For example, the crosslinker may include from 3 to 8 (e.g. 3 or 4) primary hydroxyl, primary amine, or secondary amine groups per molecule, and may have an average equivalent weight from 30 to about 300. If included, the crosslinker component may be present in an amount from 0.1 wt% to 5 wt%, based on a total weight of isocyanate-reactive component.

The optional additive component may exclude any cell openers. For example, often, to reduce the possibility of and/or prevent shrinkage in foams, cell openers are added to the foam-forming mixtures. But the resulting foams formed with a cell opener may have a coarse cell structure and/or a rough outer surface. Such a coarse structure and rough surface conflicts with consumer expectations for impact protection foam, where a fine cell structure with a smoother surface is perceived to offer better comfort.

Various other additives, e.g., those known to those skilled in the art, may be included in the optional additive component. For example, fillers such as inorganic and/or organic fillers, coloring agents, water-binding agents, surface-active substances, extenders and/or plasticizers may be used. Dyes and/or pigments (such as titanium dioxide and/or carbon black), may be included in the optional additive component to impart color properties to the polyurethane elastomer. Pigments may be in the form of solids or the solids may be pre-dispersed in a polyol carrier. Reinforcements (e.g., flake or milled glass and/or fumed silica), may be used to impart certain properties. Other additives include, e.g., UV stabilizers, antioxidants, air release agents, and adhesion promoters, which may be independently used depending on the desired characteristics of the polyurethane elastomer.

Once the isocyanate component and the isocyanate-reactive component are mixed, the result reaction mixture is cured to form the polyurethane polymers. Polymers based on thermoplastic polyurethane (TPU) include segmented copolymers composed of hard and soft segments. The TPU elastomers may get their strength from the phase separation of soft segments from hard segments. The hard segment may include the combination of the isocyanate and chain extender components and the "soft segment" is the balance of the TPU.

Polyurethane foams may be separated into two types, according to their method of manufacture. Molded foams are prepared by reacting the polyurethane-forming components in a closed mold to produce foams having a predetermined shape. Slabstock foams are prepared by permitting the foam components to freely rise against their own weight.

For example, the polyurethane polymer may be formed by a pouring or injecting application in which the isocyanate component and the isocyanate-reactive component are combined on a surface (e.g., on the surface of a heated mold or the use of a mold may be avoided). If a mold is used, a polyurethane article have a specified shape may be formed that includes the polyurethane polymer/foam as a single layer (e.g., and excludes any other polyurethane layers). If a mold is not used during the pouring or injecting application, it is possible to cut and/or shape the resultant polyurethane article into specific shapes (e.g., after cooling). The pouring or injecting application may be done on a conveyor device, e.g., in a continuous manner.

Molded viscoelastic polyurethane foams can be formed in an open mold process or a closed mold process. In the open mold process two reactive components are mixed and poured into an open mold and well dispersed onto the mold surface. The mold is then closed or left open and the mixture is allowed to expand and cure. With the closed mold process, the mixed components are injected into a closed mold through an injection point, hence foaming mass has to flow well within the mold. In both cases a release agent may be to be applied by spraying or brushing onto the mold surface including the lid before foam injection (between 10 seconds and 1 minute depending on the process conditions) to reduce the possibility of and/or prevent the foam from sticking to the mold and to get a foam skin without surface and/or sub-surface defects, such as pin holes, voids, local collapses, bubbles, blisters, and skin peeling, which may be detrimental for the application, both for aesthetic and for comfort reasons.

All parts and percentages are by weight unless otherwise indicated. All molecular weight measurements are based on number average molecular weight, unless indicated otherwise.

### Examples

The following materials are used:

### Polyols

- Castor Oil: A plant derived hydrophobic polyol that includes a majority of ricinoleic acid (available from Alberdingk Boley).
- Polyol A: A hydrophilic polyol that is a glycerin initiated polyoxyethylene capped polyoxypropylene/polyoxyethylene triol having an average molecular weight of approximately 4500, a polyoxyethylene percentage around 90%, a final primary OH around 80-90%, and an OH number of approximately 37 mg KOH/g (available from The Dow Chemical Company as VORANOL^{™} 1447).
- Polyol B: A polyol that is a polyoxyethylene capped polyoxypropylene/polyoxyethylene triol having an average molecular weight of approximately 5000 g/mol (available from The Dow Chemical Company as VORANOL^{™} CP 4711).
- Polyol C: A hydrophobic polyol that is an ethylene oxide capped polyoxypropylene/polyoxyethylene triol having an average molecular weight of approximately 450 g/mol (available from The Dow Chemical Company as VORANOL^{™} CP 450).
- Comparative Polyol D: A polyol blend that includes various polyols. The blend includes VORANOL^{™} CP 1421 (approximately 33 wt%), VORANOL^{™} CP 260 (approximately 10 wt%), VORANOL^{™} PP 3039 (approximately 27 wt%), and VORALUX^{™} HL 400 (approximately 30 wt%), each available from The Dow Chemical Company. Weight percent is based on the total weight of the Comparative Polyol D.
- Comparative Polyol E: A copolymer polyol (available from The Dow Chemical Company).

### Prepolymers

- SPECFLEX^{™} NE 371: An MDI based prepolymer having an average NCO content from 28.8 wt% to 30.8 wt% (available from The Dow Chemical Company)
- VORALAST^{™} GE 143: An MDI based prepolymer having an average NCO content from 17.9 wt% to 18.9 wt% (available from The Dow Chemical Company).

### Additives

- Catalyst 1: A catalyst of 33% solution of triethylenediamine in propylene glycol (available from Air Products & Chemicals as DABCO^{®} 33 LV ).
- Catalyst 2: A catalyst (available from Air Products & Chemicals as DABCO^{®} 33 LB).
- Catalyst 3: A catalyst of 70% bis(2dimethyl aminoethyl)ether and 30% dipropylene glycol (available from Momentive as NIAX^{™} A-1 ).
- Catalyst 4: A blowing catalyst including Dimethylethanolamine also known as DMEA (available from Sigma Aldrich).
- Catalyst 5: A tin catalyst (available from Momentive as Formrez^{™} UL-38).
- Butanediol: A chain extender of 1,4-butanediol (Sigma-Aldrich).
- DEOA: A crosslinking agent of diethanolamine (available from Sigma-Aldrich).
- Glycerine: A crosslinking agent of glycerine (available from Sigma-Aldrich).
- MEG: A chain extender of monoethylene glycol (available from The Dow Chemical Company).
- Surfactant: A silicone surfactant (available from Evonik Industries as TEGOSTAB^{®} B 8715 LF2).

Referring to Table 1, firstly isocyanate-reactive components that include polyols and additives is prepared according to the formulations in Table 1, below. In particular, the compounds are blended for 30 minutes, as would be understood by a person of ordinary skill in the art.

**Table 1**

| | **Working Example 1** (wt%) | **Working Example 2** (wt%) | **Comparative Example A** (wt%) |
|---|---|---|---|
| Castor Oil | 39.7 | 38.9 | |
| Polyol A | 39.5 | 38.6 | -- |
| Polyol B | 10.0 | 10.0 | -- |
| Polyol C | 5.0 | 5.0 | -- |
| Comparative Polyol D | -- | -- | 73.8 |
| Comparative Polyol E | -- | -- | 18.6 |
| Catalyst 1 | 2.0 | 2.0 | 2.0 |
| Catalyst 2 | -- | -- | 0.5 |
| Catalyst 3 | 0.3 | 0.3 | 0.2 |
| Catalyst 4 | -- | -- | 0.7 |
| Catalyst 5 | < 0.1 | < 0.1 | < 0.1 |
| Butanediol | -- | 2.0 | 2.0 |
| DEOA | 0.8 | 0.8 | 0.8 |
| Glycerine | 0.2 | 0.2 | 0.2 |
| MEG | 1.0 | 1.0 | -- |
| Surfactant | 0.8 | 0.8 | 0.8 |
| Water | 0.4 | 0.4 | 0.4 |

Working Example 3, Working Example 4, Comparative Example B, and Comparative Example C are prepared using the isocyanate-reactive formations in Table 1, above.

In particular, Working Example 3 is prepared by reacting approximately 100 parts by weight (approximately 120 grams) of Working Example 1 with approximately 67 parts by weight (approximately 80 grams) of VORALAST^{™} GE 143 ISO at an isocyanate index of approximately 94. Working Example 4 is prepared by reacting approximately 100 parts by weight (approximately 117 grams) of Working Example 2 with approximately 71 parts by weight (approximately 83 grams) of VORALAST^{™} GE 143 ISO at an isocyanate index of approximately 88.

Comparative Example B is prepared by reacting approximately 100 parts by weight (approximately 142 grams) of Comparative Example A with approximately 41 parts (approximately 58 grams) of SPECFLEX^{™} NE 371 ISO at an isocyanate index of approximately 80. Comparative Example C is prepared by reacting approximately 100 parts by weight (approximately 119 grams) of Comparative Example A with approximately 68 parts (approximately 81 grams) of VORALAST^{™} GE 143 ISO at an isocyanate index of approximately 82. The resultant test plates (having dimensions 200 x 200 x 10 mm) have a molded density of approximately 480 g/L and are prepared at various indexes (J = 82÷100) using a low pressure pouring machine.

Referring to Table 2, Working Examples 3 and 4 and Comparative Examples B and C are evaluated for impact performance at using the standard EN 1621-1. Impact after humid aging is measured at room temperature after hydrolysis (72 hours at 70±2°C and >96% relative humidity, 24 hours at 23°C of conditioning before testing).

**Table 2**

| FORMULATIONS | Density (g/L) | Level 1 impact protections | Level 2 impact protections | Impact at 23°C (kN) | Impact at - 10°C (kN) | Impact at 40°C (kN) | Impact after humid aging (kN) |
|---|---|---|---|---|---|---|---|
| **Comparative Example B** | 480 | < 35 kN | < 20 kN | 20.3 | 15.7 | 23.5 | 28.7 |
| | | | | 19.8 | 15.2 | 23.7 | 26.7 |
| | | | | 20.3 | 14.5 | 23.6 | 26.8 |
| | | | | | | | |
| **Comparative Example C** | 480 | | | 18.7 | 15.9 | 23.5 | 32.2 |
| | | | | 18.9 | 15.3 | 22.6 | 31.9 |
| | | | | 18.7 | 14.6 | 22.0 | 31.7 |
| | | | | | | | |
| **Working Example 3** | 480 | | | 21.9 | 13.3 | 24.3 | 24.1 |
| | | | | 22.0 | 13.6 | 23.3 | 23.7 |
| | | | | 22.1 | 14.4 | 23.3 | 26.4 |
| | | | | | | | |
| **Working Example 4** | 480 | | | 22.4 | 13.4 | 23.0 | 29.2 |
| | | | | 22.4 | 13.3 | 22.3 | 28.5 |
| | | | | 22.4 | 13.6 | 22.8 | 30.1 |

According to the above table, it is clear that Working Examples 3 and 4 are suitable for the production of impact protectors. In particular, at -10 °C, Working Examples 3 and 4 demonstrate improved performance.

Referring to Table 3, three separate specimens for each of Working Examples 3 and 4 and Comparative Examples B and C are evaluated for water absorption.

**Table 3**

| FORMULATION S | SPECIMEN S | Densit y (g/l) Ratio Iso/Pol | INITIAL WEIGH T (g) | FINAL WEIGH T (g) | WATER ABSORBE D (mg) | WATER ABSORBE D (%, average) |
|---|---|---|---|---|---|---|
| **Comparative Example B** | 1 | 480 | 12,019 | 12,961 | 942 | **7.6** |
| | 2 | | 11,962 | 12,804 | 842 | |
| | 3 | | 12,056 | 13,006 | 950 | |
| | | | | | | |
| **Comparative Example C** | 1 | 480 | 11,884 | 12,499 | 615 | **5.2** |
| | 2 | | 11,899 | 12,530 | 631 | |
| | 3 | | 11,777 | 12,368 | 591 | |
| | | | | | | |
| **Working Example 3** | 1 | 480 | 12,111 | 12,438 | 327 | **3** |
| | 2 | | 12,110 | 12,518 | 408 | |
| | 3 | | 12,146 | 12,502 | 356 | |
| | | | | | | |
| **Working Example 4** | 1 | 480 | 11,802 | 12,165 | 363 | **3.5** |
| | 2 | | 11,765 | 12,215 | 450 | |
| | 3 | | 11,708 | 12,133 | 425 | |

Referring to Table 3, above, average water absorbed is determined by measuring water uptake. In particular, water absorption is measured by weighing a 50 x 50 mm sample and then placing the sample in an air-tight container having a layer of water at the bottom. Then, the sample is held out of the water by a rack, but air flow throughout the container is not restricted. The container is then sealed and heated to 70°C for 24 hours, which exposes the sample to 100% humidity environment for a prolonged period of time. The sample is then removed from the container and placed immediately in an air-tight bag, which is sealed and cooled to 23°C (the time depends on density and size of the samples, with dense samples taking the longest to cool to 23°C, typically 4-6 hours until the whole sample is 23°C). This process does not dry the sample but cools it to ambient temperature. The sample is then weighted again and the percentage of water absorption is calculated by the difference in weight. For each of Working Examples 3 and 4 and Comparative Examples B and C, this process is used to test three separate 50 x 50 mm samples. The average water absorbed is the average water absorption calculated using the results of the three separate 50 x 50 mm samples.

Referring to Table 4, below, Working Examples 3 and 4 and Comparative Examples B and C are evaluated for hardness and Ball rebound at both 23 °C and -10 °C. Hardness is measured according to DIN 53543. Ball rebound is measured according to ASTM D 3574H. Whereas, ball rebound is a test procedure used to measure the surface resiliency of flexible polyurethane foam. The test involves dropping a steel ball of known mass from a predetermined height onto a foam sample. The rebound height attained by the steel ball, expressed as a percentage of the original drop height, is the ball rebound resiliency value

**Table 4**

| | Density (g/L) | Shore A Hardness at 23°C | Shore A Hardness at -10°C | Ball rebound at 23°C (%) | Ball rebound at -10°C (%) |
|---|---|---|---|---|---|
| **Comparative Example B** | 480 | 25-26 | 60-62 | 7 | 17 |
| **Comparative Example C** | 480 | 27 | 55-57 | 8 | 16 |
| **Working Example 3** | 480 | 23-25 | 35-40 | 9 | 12-13 |
| **Working Example 4** | 480 | 22 | 45 | 14-15 | 10 |

Referring to Table 4, above, the benefits of Working Examples 3 and 4 in cold conditions are shown above with respect to hardness and ball rebound. For example, Comparative Examples B and C are relatively stiff and not flexible at -10°C. In contrast, Working Examples 3 and 4 are characterized by flexibility, which can mean comfort for the end-user. With respect to the ball rebound test, Working Examples 3 and 4 demonstrate an ability to dissipate energy in an effective manner (the lower the value, the better the energy dissipation).

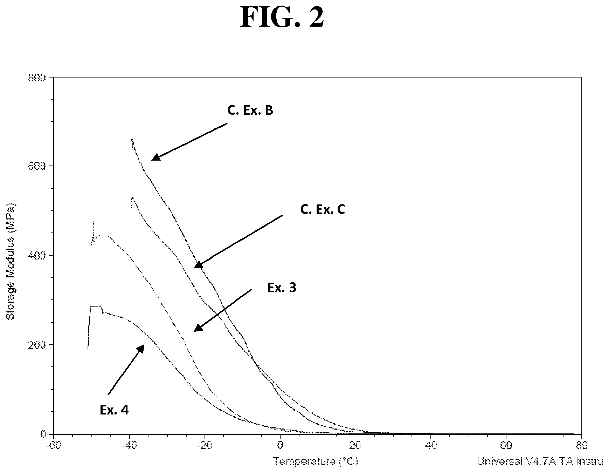

Referring to FIGS. 1 and 2, tan delta and storage modulus are represented in the illustrated graphs, respectively. Tan delta describes the ability of the material to dissipate energy. Storage modulus is the direct expression of hard segment content in the polymer matrix (the higher the value, the higher the content of hard segments at a specific temperature) and can be directly correlated with the final hardness of the material at specific temperatures. The higher the hardness, the more discomfort may be realized by the end-user.

As shown in FIG. 1, different glass transition temperature ranges (T_{g} shown peaks in the graphs) for the materials are realized. For examples, Working Examples 3 and 4 realize broader peaks (and two peaks indicative of separated phase morphology Working Example 4), so the materials are able to perform in a wide range of temperatures. As shown in FIG. 2, Working Examples 3 and 4 realize less hard segments (lower hardness, the higher the flexibility) than Comparative Examples B and C, especially at temperatures below 10°C.

With respect to FIGS. 1 and 2, DMTA analysis is performed by using a TA Instrument DMA Q800 equipped with liquid nitrogen cooling system (LNCS) in tensile deformation. Specimens are prepared by removing a 1.4-1.7 mm thick layer from the surface of the original material, and then cutting them to rectangular geometry of 25 x 7 mm. Experimental conditions include: isothermal temperature at -70 °C for 2 minutes; temperature ramp from minus 70 °C to 100 °C at 2 °C/min; frequency 1 Hertz (Hz), preload 0.01 Newton (N); strain 15 microns (µm), force track 125%; gauge distance about 20 mm; and the cooling agent is liquid nitrogen.

## Claims

1. An impact protection foam, comprising the reaction product of an isocyanate component and an isocyanate-reactive component, wherein:
the isocyanate component includes at least one isocyanate;
the isocyanate-reactive component includes from 20 wt% to 80 wt% of a hydrophobic polyol component and from 20 wt% to 80 wt% of a hydrophilic polyol component, based on the total weight of the isocyanate reactive component,
the hydrophobic polyol component including at least one natural oil hydrophobic polyol and further including from 1 wt% to 30 wt% of a polyoxypropylene or polyoxypropylene/polyoxyethylene diol or triol that has a number average molecular weight of less than 700 g/mol,
and the hydrophilic polyol component including at least a polyether polyol having a number average molecular weight from 3,000 g/mol to 10,000 g/mol and a primary hydroxyl content of at least 50 wt%, and further including from 1 wt% to 30 wt% of an additional polyol that is a polyoxypropylene or polyoxypropylene/polyoxyethylene diol or triol having a number average molecular weight from 3,500 g/mol to 5,500 g/mol;
the isocyanate index is from 50-120; and
the foam article has a rate of energy dissipation less than 35 KN over the temperature range from -10 °C to 40 °C measured by impact test according to EN 1621-1, and a Shore A hardness of less than 55 at both 23 °C and -10 °C measured according to DIN 53543.

2. The impact protection foam as claimed in claim 1, wherein the natural oil derived hydrophobic polyol is castor oil.

3. The impact protection foam as claimed in claim 2, wherein the weight ratio of the castor oil to high molecular weight and high primary hydroxyl content hydrophilic polyether polyol is from 0.90:1.10 to 1.10: 0.90.

4. The impact protection foam as claimed in any one of claims 1 to 3, wherein the isocyanate component includes an isocyanate-terminated diphenylmethane diisocyanate based prepolymer having an average NCO content from 15 wt% to 35 wt%.

5. The impact protection foam as claimed in any one of claims 1 to 4, wherein the foam article has a rate of energy dissipation of less than 14.5 KN at -10°C.

6. The impact protection foam as claimed in any one of claims 1 to 5, wherein the impact absorption foam has a Ball rebound resiliency value of 15% or less at both 23 °C and -10 °C, as measured according to ASTM D 3574H.

7. A motorcyclist's protective clothing that includes the impact protection foam as claimed in any one of claims 1 to 6.

## Patentansprüche

1. Ein Schlagschutzschaumstoff, beinhaltend das Reaktionsprodukt einer Isocyanatkomponente und einer isocyanatreaktiven Komponente, wobei:
die Isocyanatkomponente mindestens ein Isocyanat umfasst;
die isocyanatreaktive Komponente, bezogen auf das Gesamtgewicht der isocyanatreaktiven Komponente, zu 20 Gew.-% bis 80 Gew.-% eine hydrophobe Polyolkomponente und zu 20 Gew.-% bis 80 Gew.-% eine hydrophile Polyolkomponente umfasst,
wobei die hydrophobe Polyolkomponente mindestens ein hydrophobes Polyol natürlichen Öls umfasst und ferner zu 1 Gew.-% bis 30 Gew.-% ein Polyoxypropylen- oder Polyoxypropylen-/Polyoxyethylendiol oder -triol umfasst, das ein zahlenmittleres Molekulargewicht von weniger als 700 g/mol aufweist,
und wobei die hydrophile Polyolkomponente mindestens ein Polyetherpolyol mit einem zahlenmittleren Molekulargewicht von 3000 g/mol bis 10 000 g/mol und einem Gehalt primären Hydroxyls von mindestens 50 Gew.-% umfasst und ferner zu 1 Gew.-% bis 30 Gew.-% ein zusätzliches Polyol umfasst, das ein Polyoxypropylen- oder Polyoxypropylen-/Polyoxyethylendiol oder -triol mit einem zahlenmittleren Molekulargewicht von 3500 g/mol bis 5500 g/mol ist;
der Isocyanatindex 50-120 beträgt; und
der Schaumstoffartikel über den Temperaturbereich von -10 °C bis 40 °C eine Energiezerstreuungsrate von weniger als 35 KN, gemessen durch Schlagversuch gemäß EN 1621-1, und eine Shore-A-Härte sowohl bei 23 °C als auch bei -10 °C von weniger als 55, gemessen gemäß DIN 53543, aufweist.

2. Schlagschutzschaumstoff gemäß Anspruch 1, wobei das von natürlichem Öl abgeleitete hydrophobe Polyol Rizinusöl ist.

3. Schlagschutzschaumstoff gemäß Anspruch 2, wobei das Gewichtsverhältnis des Rizinusöls zu dem hydrophilen Polyetherpolyol mit hohem Molekulargewicht und mit hohem Gehalt primären Hydroxyls 0,90 : 1,10 bis 1,10 : 0,90 beträgt.

4. Schlagschutzschaumstoff gemäß einem der Ansprüche 1 bis 3, wobei die Isocyanatkomponente ein auf Diphenylmethandiisocyanat basiertes isocyanatterminiertes Präpolymer mit einem durchschnittlichen NCO-Gehalt von 15 Gew.-% bis 35 Gew.-% umfasst.

5. Schlagschutzschaumstoff gemäß einem der Ansprüche 1 bis 4, wobei der Schaumstoffartikel bei -10 °C eine Energiezerstreuungsrate von weniger als 14,5 KN aufweist.

6. Schlagschutzschaumstoff gemäß einem der Ansprüche 1 bis 5, wobei der Schlagabsorptionsschaumstoff sowohl bei 23 °C als auch bei -10 °C einen Ball-Rückprall-Rückfederungswert von 15 % oder weniger, wie gemäß ASTM D 3574H gemessen, aufweist.

7. Eine Motorradfahrerschutzkleidung, die den Schlagschutzschaumstoff gemäß einem der Ansprüche 1 bis 6 umfasst.

## Revendications

1. Une mousse de protection contre les chocs, comprenant le produit de réaction d'un constituant isocyanate et d'un constituant réactif aux isocyanates, dans laquelle :
le constituant isocyanate inclut au moins un isocyanate ;
le constituant réactif aux isocyanates inclut de 20 % en poids à 80 % en poids d'un constituant polyol hydrophobe et de 20 % en poids à 80 % en poids d'un constituant polyol hydrophile, rapporté au poids total du constituant réactif aux isocyanates,
le constituant polyol hydrophobe incluant au moins un polyol hydrophobe d'huile naturelle et incluant en outre de 1 % en poids à 30 % en poids d'un diol ou triol de polyoxypropylène ou polyoxypropylène/polyoxyéthylène qui a une masse moléculaire moyenne en nombre de moins de 700 g/mol,
et le constituant polyol hydrophile incluant au moins un polyol de polyéther ayant une masse moléculaire moyenne en nombre allant de 3 000 g/mol à 10 000 g/mol et une teneur en hydroxyle primaire d'au moins 50 % en poids, et incluant en outre de 1 % en poids à 30 % en poids d'un polyol additionnel qui est un diol ou triol de polyoxypropylène ou polyoxypropylène/polyoxyéthylène ayant une masse moléculaire moyenne en nombre allant de 3 500 g/mol à 5 500 g/mol ;
l'indice isocyanate va de 50 à 120 ; et
l'article en mousse a un taux de dissipation d'énergie inférieur à 35 KN sur la plage de température allant de -10 °C à 40 °C mesuré par essai de choc conformément à la norme EN 1621-1, et une dureté Shore A de moins de 55 à la fois à 23 °C et -10 °C mesurée conformément à la norme DIN 53543.

2. La mousse de protection contre les chocs telle que revendiquée dans la revendication 1, dans laquelle le polyol hydrophobe dérivé d'huile naturelle est l'huile de ricin.

3. La mousse de protection contre les chocs telle que revendiquée dans la revendication 2, dans laquelle le rapport en poids de l'huile de ricin au polyol de polyéther hydrophile à haute masse moléculaire et haute teneur en hydroxyle primaire va de 0,90/1,10 à 1,10/0,90.

4. La mousse de protection contre les chocs telle que revendiquée dans n'importe laquelle des revendications 1 à 3, dans laquelle le constituant isocyanate inclut un prépolymère à base de diisocyanate de diphénylméthane à terminaison isocyanate ayant une teneur en NCO moyenne allant de 15 % en poids à 35 % en poids.

5. La mousse de protection contre les chocs telle que revendiquée dans n'importe laquelle des revendications 1 à 4, dans laquelle l'article en mousse a un taux de dissipation d'énergie de moins de 14,5 KN à -10 °C.

6. La mousse de protection contre les chocs telle que revendiquée dans n'importe laquelle des revendications 1 à 5, la mousse d'absorption des chocs ayant une valeur de résilience de rebondissement de balle de 15 % ou moins à la fois à 23 °C et -10 °C, telle que mesurée conformément à la norme ASTM D 3574H.

7. Un vêtement protecteur de motocycliste qui inclut la mousse de protection contre les chocs telle que revendiquée dans n'importe laquelle des revendications 1 à 6.
